# EUROPÄISCHE PATENTSCHRIFT

(11) **EP 1 384 631 B1**
(45) Veröffentlichungstag und Bekanntmachung des Hinweises auf die Patenterteilung: **20.09.2006**
(21) Anmeldenummer: 03008394.3
(22) Anmeldetag: 11.04.2003
(51) Int. Cl.: B60R 21/13, B62D 29/04

(54) **Aufbaustruktur für ein Fahrzeug mit Rollbügelvorrichtung**
Structure for a vehicle with roll bar
Structure de caisse d'un véhicule avec arceau de sécurité

(30) Priorität: 29.06.2002 DE 10229399
(43) Veröffentlichungstag der Anmeldung: 28.01.2004
(73) Patentinhaber: Dr.Ing. h.c.F. Porsche Aktiengesellschaft, 70435 Stuttgart (DE)
(72) Erfinder: Steinhauser, Dieter, 73630 Remshalden (DE); Meier, Thomas, 76287 Rheinstetten (DE)

(56) Entgegenhaltungen:
- EP-A- 0 685 381
- EP-A- 0 976 620
- EP-A- 1 164 073
- WO-A-98/29291
- DE-A- 4 243 186
- DE-A- 4 437 245
- DE-U- 20 103 001
- US-A- 4 521 049

## Beschreibung

Die Erfindung betrifft eine Aufbaustruktur für ein Fahrzeug, insbesondere einen Personenkraftwagen, nach dem Oberbegriff des Patentanspruchs 1.

Es ist ein offener Personenkraftwagen bekannt, EP 0 976 620 A1, der mit einer an einer Fahrgastzelle befestigten Überrollbügelvorrichtung versehen ist. Die Überrollbügelvorrichtung weist einen einzigen Überrollbügel auf, der einen Fahrgastraum des Personenkraftwagens in Fahrzeugquerrichtung überspannt und aus einem nicht metallischen Werkstoff besteht.

Die EP 0 286 058 A2 befasst sich mit einem selbsttragenden Strukturelement aus Verbundwerkstoff für einen Fahrzeugaufbau, das durch ein Wandteil gebildet wird. Das Wandteil weist einen Zwischenkörper auf, der von Deckschichten begrenzt wird. Dieses Strukturelement soll ein gutes Festigkeits/Gewichts-Verhältnis aufweisen.

Aus der US 3,145,000 geht ein hochfestes glasfaserverstärktes Bauteil für eine Tragfläche eines Flugkörpers hervor, welche Tragfläche mit einem Wandabschnitt versehen ist, der einen in Deckwände eingebetteten Kern, bspw. aus einer Honigwabenstruktur, besitzt.

Die US-A-4 521 049 offenbart eine Aufbaustruktur für ein Personenfahrzeug, die eine Fahrgastzelle mit einer hinter einem Fahrgastsitz angeordneten, sich quer zur Fahrzeuglängsrichtung erstreckenden Rollbügelvorrichtung aufweist, wobei eine benachbart des Fahrgastsitzes verlaufende Wandstruktur der Fahrgastzelle und die Rollbügelvorrichtung aus nicht metallischen Werkstoff, beispielsweise Kunststoff, bestehen und baulich unlösbar vereinigt sind.

Aufgabe der Erfindung ist es eine Aufbaustruktur für eine Fahrzeug, insbesondere einen Personenkraftwagen zu schaffen, bei der eine Rollbügelvorrichtung hochbelastbar an einer Fahrgastzelle der Aufbaustruktur angebracht ist, wobei die Rollbügelvorrichtung bei geringem Gewicht auf einfache und wirtschaftliche Weise mit der Fahrgastzelle verbindbar ist.

Erfindungsgemäß wird diese Aufgabe durch die Merkmale des Patentanspruchs 1 gelöst.
Weitere, die Erfindung ausgestaltende Merkmale sind in den Unteransprüchen enthalten.

Die mit der Erfindung hauptsächlich erzielten Vorteile sind darin zu sehen dass, die Rollbügelvorrichtung und die Fahrgastzelle, weil aus hochfestem nicht metallischem Werkstoff bspw. faserverstärktem Kunststoff bestehend bezüglich niederem Gewicht und hoher Festigkeit optimiert sind. Aufgrund dieser Werkstoffwahl und der Verbindungsart lassen sich auch die Fahrgastzelle und die Rollbügelvorrichtung auf günstige Weise herstellen, wobei durch ihre unlösbare Verbindung aufwendige Schrauben, deren Bohrungen sich querschnittsschwächend auswirken, entfallen. Darüber hinaus tragen die Einzelrollbügel der Rollbügelvorrichtung, die lediglich im Bereich der Fahrgastsitze ausgebildet sind, dazu bei, dass sich konstruktive Freiheitsgrade ergeben.

In der Zeichnung wird ein Ausführungsbeispiel der Erfindung gezeigt, das nachstehend näher beschrieben ist.

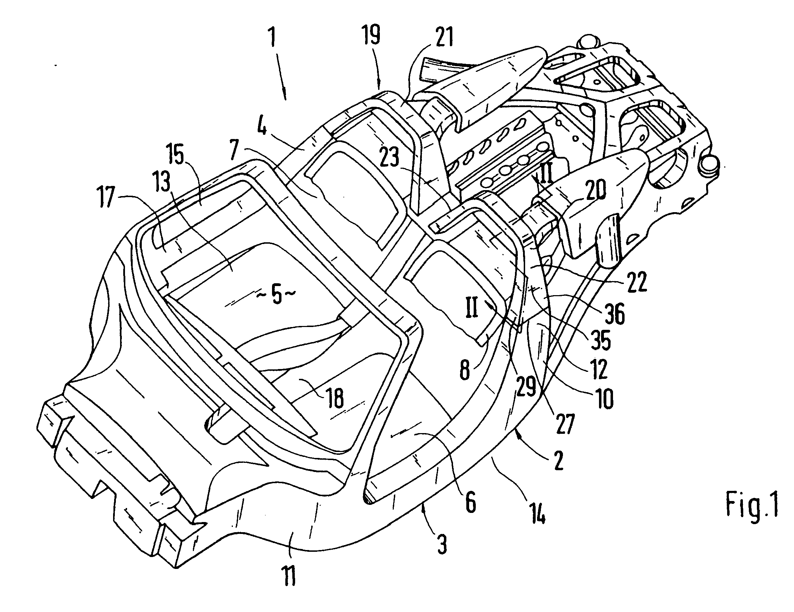

Es zeigen
- Fig. 1: eine Schrägansicht von oben auf eine Aufbaustruktur eines Personenkraftwagens nach der Erfindung,

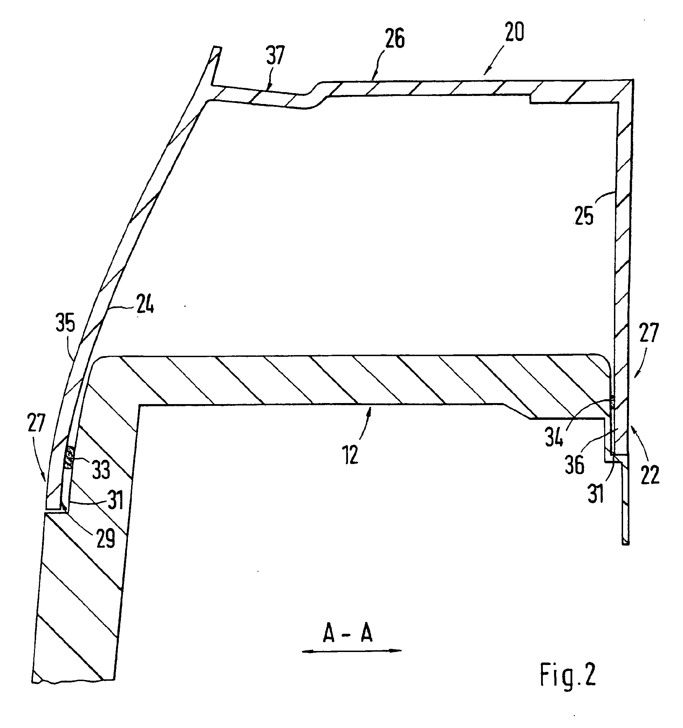

- Fig. 2: einen Schnitt nach der Linie ll-ll der Fig.1 in größerem Maßstab.

Von einem Personenkraftwagen 1 der offenen Bauart ist im wesentlichen nur ein Aufbau 2 dargestellt, der eine Aufbaustruktur 3 umfasst. Die Aufbaustruktur 3 besitzt eine Fahrgastzelle 4 mit einem Fahrgastraum 5, der Aufnahmen 6 und 7 für zwei nebeneinander angeordnete Fahrgastsitze 8 und 9 aufweist. Die Fahrgastzelle 4 besteht aus nicht metallischem Werkstoff bspw. faserverstärktem Kunststoff - Verbundwerkstoff - und besitzt ein Wandgebilde 10 mit einer vorderen Wandstruktur 11 und einer hinteren Wandstruktur 12, die an eine Bodenstruktur 13 angegliedert. Die Bodenstruktur 13 wird an Längsseiten 14,15 von sich zwischen den Wandstrukturen 11 und 12 erstreckenden im Querschnitt kastenförmigen Längsträgern 16,17 begrenzt, und sie weist einen Mitteltunnel 18 auf, der zwischen der vorderen Wandstruktur 11 und der hinteren Wandstruktur verläuft. Ein Beispiel für hochfesten nicht metallischem Werkstoff ist der eingangs genannten EP 0 286 058 A1 entnehmen, der bei Aufbaustrukturen von Fahrzeugen einsetzbar ist.

Hinter den Fahrgastsitzen 8,9 ist benachbart der hinteren Wandstruktur 12 eine Rollbügelvorrichtung 19 angeordnet, die sich quer zur Fahrzeuglängsrichtung A-A erstreckt und ebenfalls aus hochfestem nicht metallischem Werkstoff bspw. faserverstärktem Kunststoff - CFK - hergestellt ist. Die Rollbügelvorrichtung 19 ist baulich mit der Fahrgastzelle 4 bzw. mit der Wandstruktur 12 vereinigt, und zwar unlösbar. Die Rollbügelvorrichtung 19 wird durch zwei Einzelrollbügel 20,21 gebildet, die im Bereich der Aufnahmen 6,7 der Fahrgastsitze 8,9 an der hinteren Wandstruktur 12 angebracht sind und jeweils zwei aufrechte Rollbügelsäulen 22,23 besitzt. Jeder Einzelrollbügel z.B. 22 umfasst - im Schnitt gesehen - aufrechte und in Fahrzeuglängsrichtung A-A beabstandete Schenkelwände 24,25, zwischen denen sich eine Stegwand 26 erstreckt. Die Rollbügelsäulen 22,23 weisen an freien Enden 27,28 Flanschvorrichtungen 29,30 auf, die an die hintere Wandstruktur 12 herangeführt sind und in Ausnehmungen 31,32 der zuletzt genannten Wandstruktur ruhen, und zwar unter Vermittlung von Klebungen 33,34. Die Flanschvorrichtung 29 ist mit Flanschen 35,36 versehen, die quer zur Fahrzeuglängsrichtung A-A ausgerichtet sind. Schließlich ist die Stegwand 26 zur Auflage eines nicht gezeigten bspw. abnehmbaren Daches ausgebildet und weist eine Rinne 37 auf, in die eine Dichtkörper einsetzbar ist; der Dichtkörper ist zwischen dem Einzelrollbügel 22 und dem Dach wirksam.

## Patentansprüche

1. Aufbaustruktur (2) für ein Fahrzeug, insbesondere einen Personenkraftwagen (1), die eine Fahrgastzelle (4) mit einer hinter Fahrgastsitzen (8, 9) angeordneten sich quer zur Fahrzeuglängsrichtung erstreckenden Rollbügelvorrichtung (19) aufweist, wobei eine benachbart der Fahrgastsitze (8, 9) verlaufende Wandstruktur (12) der Fahrgastzelle (4I und die Rollbügelvorrichtung (19) aus nicht metallischem Werkstoff bspw. Kunststoff bestehen und baulich unlösbar vereinigt sind, **dadurch gekennzeichnet, dass** die Rollbügelvorrichtung (19) aus hochfestem nicht metallischem Werkstoff, bspw. faserverstärktem Kunststoff, besteht und durch zwei im Bereich der Fahrgastsitze (8, 9) angebrachte Einzelrollbügel (20, 21) gebildet wird, und jeder Einzelrollbügel (20, 21) zwei aufrechte Rollbügelsäulen (22, 23) besitzt, wobei jeder Einzelrollbügel (z.B. 20) - im Querschnitt gesehen - aufrechte Schenkelwände (24, 25) umfasst, zwischen denen sich eine Stegwand (26) erstreckt und dass freie Enden (27, 28) der Rollbügelsäulen (22, 23) nach Art von Flanschvorrichtungen (29, 30) ausgeführt sind, die in Ausnehmungen (31, 32) der Wandstruktur (12) ruhen und mittels Klebungen (33, 34) in Lage gehalten werden.

2. Aufbaustruktur nach Anspruch 1, **dadurch gekennzeichnet, dass** die Flanschvorrichtungen (29, 30) erste quer zur Fahrzeuglängsrichtung (A-A) verlaufende Flansche (35) und zweite in Fahrzeuglängsrichtung (A-A) ausgerichtete Flansche (36) aufweist.

3. Aufbaustruktur nach Anspruch 2, **dadurch gekennzeichnet, dass** die Stegwand (26) zur Auflage eines Daches ausgebildet und mit einer Rinne (37) zur Aufnahme eines Dichtkörpers ausgebildet ist.

## Claims

1. A body structure (2) for a vehicle, especially a passenger vehicle (1), comprising a passsenger cell (4) with a roll-bar device (19) arranged behind passenger seats (8, 9) and extending transversely to the vehicle longitudinal direction, wherein a wall structure (12) of the passenger cell (4) and the roll-bar device (19) are made of a non-metallic material, for example plastics, and are structurally non-detachably connected to one another, the wall structure (12) extending adjacent to the vehicle seats (8, 9), **characterised in that** the roll-bar device (19) is made of a high-strength, non-metallic material, for example fibre-reinforced plastics, and is formed by two individual roll bars (20, 21) mounted in the region of the passenger seats (8, 9), and each individual roll bar (20, 21) has two upright roll-bar pillars (22, 23), wherein each individual roll bar (e.g. 20) - when seen in cross-section ― comprises upright side walls (24, 25), between which a connecting wall (26) extends, and **in that** free ends (27, 28) of the roll-bar pillars (22, 23) are constructed in the manner of flange devices (29, 30) which rest in recesses (31, 32) in the wall structure (12) and are held in position by means of glued connections (33, 34).

2. A body structure according to claim 1, **characterised in that** the flange devices (29, 30) have first flanges (35) extending transversely to the vehicle longitudinal direction (A-A) and second flanges (36) extending in the vehicle longitudinal direction (A-A).

3. A body structure according to claim 2, **characterised in that** the connecting wall (26) is formed for supporting a roof and is formed with a groove (37) for receiving a sealing member.

## Revendications

1. Structure de carrosserie (2) pour un véhicule, en particulier une voiture de tourisme (1), qui comporte une cellule d' habitacle (4) avec un dispositif à arceau de sécurité (19) disposé derrière des sièges d'habitacle (8, 9) et s'étendant transversalement à la direction longitudinale du véhicule, une structure de paroi (12), s'étendant au voisinage des sièges d'habitacle (8, 9), de la cellule d'habitacle (4), et le dispositif à arceau de sécurité (19) étant constitués d'un matériau non métallique par exemple de matière plastique et réunis de manière inséparable de par leur construction, **caractérisée en ce que** le dispositif à arceau de sécurité (19) est constitué d'un matériau non métallique très résistant, par exemple d'une matière plastique renforcée par des fibres, et est formé par deux arceaux individuels (20, 21) fixés dans la zone des sièges d'habitacle (8, 9), et chaque arceau individuel (20, 21) possède deux montants d'arceau (22, 23) verticaux, chaque arceau individuel (par exemple 20) - vu en coupe transversale - comprenant des parois de côté (24, 25), entre lesquelles s'étend une paroi d'entretoise (26), et **en ce que** des extrémités libres (27, 28) des montants d'arceau (22, 23) sont réalisés à la manière de dispositifs à brides (29, 30) qui reposent dans des évidements (31, 32) de la structure de paroi (12) et sont immobilisés par des collages (33, 34).

2. Structure de carrosserie selon la revendication 1, **caractérisée en ce que** les dispositifs à brides (29, 30) comportent des premières brides (35) s'étendant transversalement à la direction longitudinale (A-A) du véhicule et des deuxièmes brides (36) dirigées dans la direction longitudinale (A-A) du véhicule.

3. Structure de carrosserie selon la revendication 2, **caractérisée en ce que** la paroi d'entretoise (26) est réalisée pour supporter un toit et présente une rigole (37) pour recevoir un corps d'étanchéité.
